# EUROPEAN PATENT SPECIFICATION

(11) **EP 0 667 930 B1**
(45) Date of publication and mention of the grant of the patent: **12.03.1997**
(21) Application number: 93923536.2
(22) Date of filing: 21.10.1993
(51) Int. Cl.: E21B 33/13

(54) **DRILLING AND CEMENTING A WELL**
BOHREN UND ZEMENTIEREN VON LÖCHERN
FORAGE ET CIMENTATION D'UN PUITS

(30) Priority: 22.10.1992 US 964991
(43) Date of publication of application: 23.08.1995
(73) Proprietor: SHELL INTERNATIONALE RESEARCH MAATSCHAPPIJ B.V., 2596 HR Den Haag (NL)
(72) Inventor: COWAN, Kenneth, Michael, Sugar Land, TX 77478 (US); HALE, Arthur, Herman, Houston, TX 77074 (US)
(86) International application number: PCT/EP93/02932
(87) International publication number: WO 94/09252

(56) References cited:
- US-A- 3 557 876
- US-A- 3 557 876
- US-A- 5 058 679
- US-A- 5 213 160

## Description

This invention relates to drilling and cementing a well. A borehole for an oil well or gas well is normally drilled with an initial diameter of about 50 cm. It has long been known to drill smaller diameter holes, known as slim holes, for exploratory wells. These wells generally have a borehole of no more than 13-15 cm initial diameter. It would be desirable to drill slim hole production wells in some instances.

As with the drilling of conventional boreholes, the slim hole process is generally carried out using a rotary drilling process.

The rotary drilling of a borehole is accomplished using a rotary drilling assembly comprising a by rotating a drill bit attached to the lower end of a drill string. Weight is applied to the drill bit while rotating to create a borehole into the earth. The drill string is hollow and pipe sections are added to the drill string to increase its length as the borehole is deepened. In rotary drilling the drill bit can be rotated by rotating the drill string and/or by driving a downhole motor arranged at the lower end of the drill string.

This rotary drilling process creates significant amounts of friction which produces heat along with fragments of the strata being penetrated. The fragments of the strata must be removed from the borehole and the drill bit must be cooled to extend its useful life. Both of these necessities are accomplished by the circulation of a fluid down through the drill string and up to the surface between the drill string and the wall of the borehole.

Once the borehole has been drilled to the desired depth, it may be desirable to isolate the separate areas, zones or formations traversed by the borehole. For extraction of fluids from formations, a conduit (casing) must be inserted into the borehole extending from the surface downward, and liners may be hung inside the casing.

At this point it becomes necessary to fill the annulus between the casing and the borehole wall or between the liner and casing with a material which will seal the annulus and provide structural support for the casing or liner. This is commonly referred to as primary cementing.

Slim hole drilling creates two problems. First, it is more difficult to remove the fluid in the annulus between the borehole and casing because the annulus is smaller. Second, it is more difficult to remove the filter cake on the side of the borehole wall, again because the annulus is so narrow. This latter problem is significant because the filter cake is generally incompatible with the cement. This can result in channelling of fluids used to wash out the drilling fluid and/or channelling of the cement leaving significant areas of unremoved and incompatible drilling fluid in the annulus. This results in voids in the final cementing job.

USA patent specification No. 3 557 876 discloses a method for drilling and cementing a well comprising:
drilling a borehole with a rotary drilling assembly comprising a drill string and a drill bit utilizing a drilling fluid comprising water and furnace slag;
circulating the drilling fluid down the drill string and up an annulus between the drill string and wall of the borehole, thus laying down a filter cake on the wall of the borehole during the drilling;
withdrawing the drilling assembly and inserting a casing;
adding an activator to the drilling fluid to produce a cementitious slurry; and
circulating the cementitious slurry down the casing and up into the annulus.

It is an object of this invention to cement a slim hole well.

It is a further object of this invention to avoid the formation of voids in a cementing job in a slim hole well.

It is a further object of this invention to avoid the problems of incompatibility between filter cake and cement in the annulus of a slim hole well.

To this end the method for drilling and cementing a well according to the present invention is characterized in that the furnace slag is blast furnace slag, and in that the casing has such an outer diameter that the width of the annulus between the outer surface of the casing and the inner surface of the borehole is between 0.2 and 4 cm.

It has been discovered that by utilizing blast furnace slag in the drilling fluid, a compatible filter cake is laid down on the borehole wall and thus the filter cake turns into an asset rather than a liability. In addition, as will be discussed in detail hereinbelow, undisplaced drilling fluid in the narrow annulus is converted into a strong, hard, sealing material.

The term 'slim hole drilling' is intended to encompass those techniques where the initial borehole diameter is 7 to 23 cm, more generally 10 to 15 cm. In such wells the width of the annulus between a casing or a liner and the wall of the borehole is only between 0.2 and 4 cm; generally between 0.6 and 3 cm, more generally between 1 and 2 cm. Reference to the dimension of the annulus means the difference between the radius to the inner surface of the borehole and the radius to the outer surface of the casing.

The term 'drilling fluid' as used herein means water or oil based fluids which contain water, blast furnace slag and at least one other additive such as viscosifiers, thinners, dissolved salts, solids from the drilled formations, solid weighting agents to increase the fluid density, formation stabilizers to inhibit deleterious interaction between the drilling fluid and geologic formations, and additives to improve the lubricity of the drilling fluid.

Reference is made to USA patent specification No. 5 058 679. This publication relates to converting a drilling fluid in-situ to a cement by adding blast furnace slag for cementing. In this case the cement-containing drilling fluid is not used for drilling and subsequent cementing, nor does this publication relates to the specific problems associated with cementing casings in slim hole this invention becomes a part of the final cement, the fluid can be referred to as a universal fluid, i.e., is useful in the drilling and cementing.

Generally, the initial drilling fluid will be any one of the known types of drilling fluids which has been combined with blast furnace slag. Suitable drilling fluids include those known in the art as water-based muds, fresh water mud, sea water mud, salt mud, brine mud, lime mud, gypsum mud, polyalcohol mud and oil-in-water emulsions. One group of suitable drilling fluids is disclosed in USA patent specification No. 5 058 679. Also, oil-containing muds which also contain water can be utilized such as low water content oil-base mud and invert oil-emulsion mud. In all cases the mud will also have blast furnace slag which will generally be present in an amount between 2.8 and 285 kg/m³ of final drilling fluid, preferably between 28 and 228 kg/m³, most preferably between 57 and 143 kg/m³.

A typical drilling fluid formulation to which cementitious material may be added to form a universal drilling fluid is as follows: 10-20 wt% salt, 23-28 kg/m³ bentonite, 11-17 kg/m³ carboxymethyl starch (fluid loss preventor), sold under the trade name "BIOLOSE" by Milpark Drilling Fluids, 1-3 kg/m³ partially hydrolyzed polyacrylamide (PHPA) which is a shale stabilizer, sold under the trade name "NEWDRIL" by Milpark Drilling Fluids, 3-4 kg/m³ CMC sold under the trade name "MILPAC" by Milpark Drilling Fluids, 85-200 kg/m³ drill solids, and 0-715 kg/m³ barite.

Because the drilling fluid becomes a part of the final cementitious slurry, the amount of used drilling fluid which must be disposed of is greatly diminished.

In another embodiment of this invention, most or all of the components of the drilling fluid are chosen such that they have a function in the cementitious material also. The following Tables 1 and 2 illustrates the uniqueness of such drilling fluid formulations and cementitious slurry formulations.

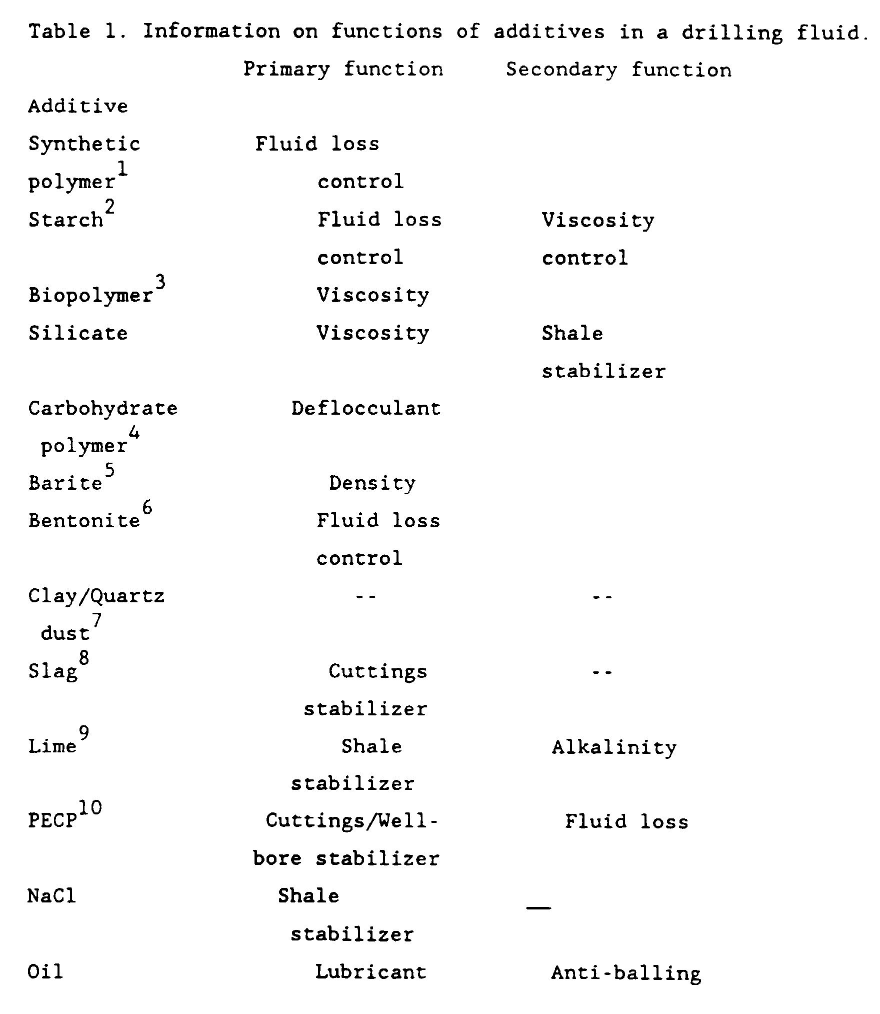

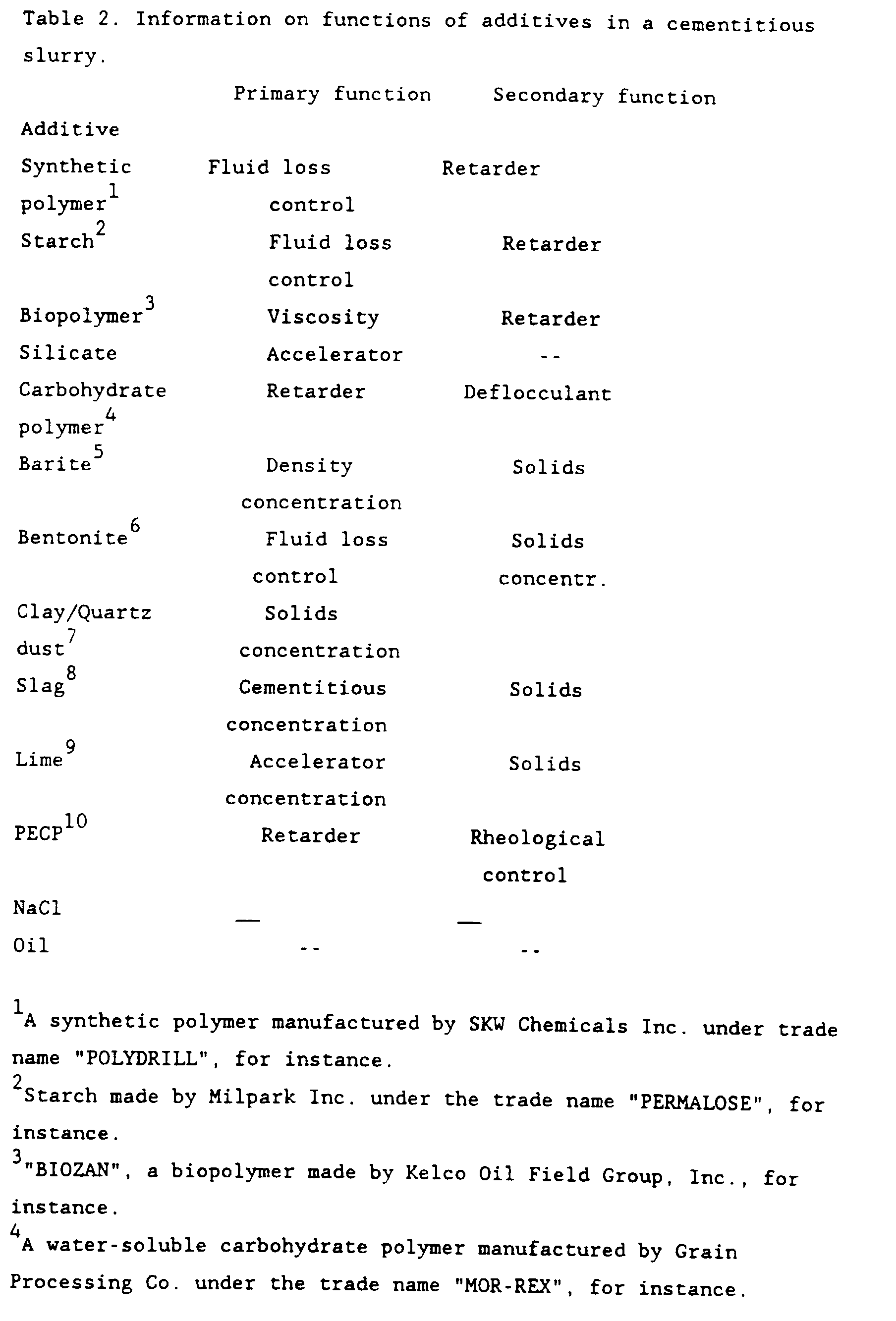

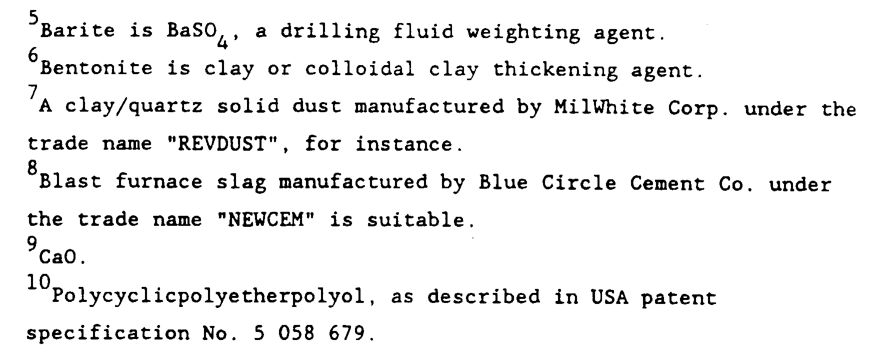

By 'blast furnace slag' is meant the hydraulic refuse from the melting of metals or reduction of ores in a furnace as disclosed in USA patent specification No. 5 058 679, the disclosure of which is incorporated herein by reference. By 'phosphorus salt' is meant a phosphonate, a phosphate or a polyphosphate as is described in detail hereinafter.

The preferred blast furnace slag used in this invention is a high glass content slag produced by quickly quenching a molten stream of slag at a temperature of between 1400 °C and 1600 °C through intimate contact with large volumes of water. Quenching converts the stream into a material in a glassy state having hydraulic properties. At this stage it is generally a granular material that can be easily ground to the desired degree of fineness. Silicon dioxides, aluminium oxides, iron oxides, calcium oxide, magnesium oxide, sodium oxide, potassium oxide, and sulphur are some of the chemical components in slags. Preferably, the blast furnace slag used in this invention has a particle size such that it exhibits a specific surface area between 2 000 cm²/g and 15 000 cm²/g and more preferably, between 3 000 cm²/g and 15 000 cm²/g, even more preferably, between 4 000 cm²/g and 9 000 cm²/g, most preferably between 4 000 cm²/g and 8 500 cm²/g. In each instance the specific surface area or surface area is the Blaine specific surface area. An available blast furnace slag which fulfils these requirements is marketed under the trade name "NEWCEM" by the Blue Circle Cement Company. This slag is obtained from the Bethlehem Steel Corporation blast furnace at Sparrows Point, Maryland.

A usual blast furnace slag composition range in weight percent is: SiO₂, 30-40; Al₂O_{3,} 8-18; CaO, 35-50; MgO, 0-15; iron oxides, 0-1; S, 0-2 and manganese oxides, 0-2. A typical specific example is: SiO₂, 36.4; Al₂O₃, 16.0; CaO, 43.3; MgO, 3.5; iron oxides, 0.3; S, 0.5; and manganese oxides, < 0.1.

Blast furnace slag having relatively small particle size is frequently desirable because of the greater strength it imparts in many instances to a final cement. Characterized in terms of particle size the term "fine" can be used to describe particles with a specific surface area between 4 000 and 7 000 cm²/g, corresponding to 16 to 31 micrometer in size; "microfine" can be used to describe those particles with a specific surface area between 7 000 and 10 000 cm²/g that correspond to particles of 5.5-16 micrometer in size and "ultrafine" can be used to describe particles with a specific surface area over 10 000 cm²/g that correspond to particles 5.5 micrometer and smaller in size. Small particle size blast furnace slags are available from Blue Circle Cement Co., Koch Industries, Tulsa, Oklahoma, under the trade name "WELL-CEM", and from Geochem under the trade name "MICROFINE MC100".

However, it is very time consuming to grind blast furnace slag to these particles sizes. It is not possible to grind blast furnace slag in a manner where particles are entirely one size. Thus, any grinding operation will give a polydispersed particle size distribution. A plot of particle size versus percent of particles having that size would thus give a curve showing the particle size distribution.

In accordance with a preferred embodiment of this invention a blast furnace slag having a polydispersed particle size distribution exhibiting at least two nodes on a plot of particle size versus percent of particles in that size is utilized. It has been found that if only a portion of the particles are in the ultrafine category, the remaining, indeed the majority, of the slag can be ground more coarsely and still give essentially the same result as is obtained from the more expensive grinding of all of the blast furnace slag to an ultrafine state. Thus, a grinding process which will give at least 5% of its particles are between 1.9 and 5.5 micrometer offers a particular advantage in economy and effectiveness. More preferably, 6 to 25wt% would be between 1.9 and 5.5 micrometer. The most straightforward way of obtaining such a composition is simply to grind a minor portion of the blast furnace slag to an ultrafine condition and mix the resulting powder with slag ground under less severe conditions. Even with the less severe conditions there would be some particles in the fine, microfine or ultrafine range. Thus, only a minority, i.e., as little as 4wt% of the slag, would need to be ground to the ultrafine particle size. Generally, 5 to 25wt%, more preferably 5 to 10wt% can be ground to the ultrafine particle size and the remainder ground in a normal way thus giving particles generally in a size range of greater than 11 micrometer, the majority being in the 11 to 31 micrometer range.

Another feature of this invention is the ability to tailor the rheology of both the drilling fluid and the final cement to the conditions of a particular borehole. This results from the fact that the use of slag as the hydraulic material gives a final cementitious slurry which is not weakened in the manner that would be the case with Portland cement if the slurry is more dilute. On the other hand, additional slag does not impart extremely high viscosity to the slurry and thus a higher concentration of hydraulic material can be used if desired.

However, in the preferred method of this invention, the drilling fluid is utilized and thereafter diluted prior to or during the addition of additional blast furnace slag. The dilution fluid can be the same as the liquid used to make the drilling fluid or it can be different. Generally, it will be brine, especially if the drilling fluid was made using brine. It can also be a more concentrated brine. In many instances, it is preferred that both the dilution fluid and the original liquid used to produce the initial drilling fluid be seawater. This is especially beneficial in offshore drilling applications where fresh water is not readily available and seawater is.

Suitably the drilling fluid contains between 57 and 143 kg/m³ of the blast furnace slag and wherein the additional blast furnace slag is added in forming the cementitious slurry in an amount sufficient to give a total amount of cementitious material in the cementitious slurry between 285 and 1 430 kg/m³.

Thus, a significant improvement in the operating procedure is provided. This is because the density of the drilling fluid can be chosen in the first place to be sufficient to avoid inflow into the borehole because of formation pressure but insufficient to rupture the borehole wall and force fluid out into the formation. By utilizing the dilution and thereafter the addition of additional blast furnace slag, the cementitious slurry can also have the density tailored to the particular operation the same as the drilling fluid.

The dilution can be carried out in either of two ways. First, a vessel containing drilling fluid can simply be isolated and the desired amount of water or other diluent added thereto. In a preferred embodiment, however, the drilling fluid is passed to a mixing zone as a flowing stream and the dilution fluid added "on the fly" to the flowing stream. Thereafter, the additional blast furnace slag is added. This avoids highly viscous cementitious slurry compositions and allows all of the pumping to be done with piping and pumps associated with the well rig without the need for pumps designed for pumping cement. This is of particular value in the areas to which this invention is of special utility, offshore drilling rigs where the transportation of additional pumping equipment is particularly inconvenient. Thus, it is possible to tailor the final density of the cementitious slurry, if desired, to a value between 30% less and 70% more than the original density of the drilling fluid, preferably between 15% less and 50% more, most preferably essentially the same, i.e., varying by no more than ±5 weight percent.

The total amount of cementitious material present in the cementitious slurry is generally between about 57 and about 1 712 kg/m³, preferably between 285 and 1 430 kg/m³, most preferably between 428 and 1 000 kg/m³. In a most preferred embodiment the hydraulic material is made up entirely, or essentially entirely, of blast furnace slag, no other hydraulic material being added.

In yet another related embodiment of this invention, universal fluid is utilized in a drilling operation and thereafter additional slag and/or additives are gradually added so as to gradually transition from a drilling fluid to a cementitious slurry.

This invention can even be used to drill extended reach slim hole wells which, themselves, present some of the same problems as slim hole wells generally because of uneven casing placement in the borehole.

The term 'drilling extended reach wells' is intended to encompass those techniques sometimes referred to as deviated drilling, horizontal drilling or directional drilling. The invention is applicable to those deviated wells where the deviation from vertical is as little as one percent since even this small deviation over the course of a borehole causes difficulty in centering the casings. The other extreme would be a truly horizontal well which would be quite rare. The invention is of particular value in those wells having a deviation from the vertical of between 1 and 90 degrees, preferably between 10 and 90 degrees, most preferably between 30 and 80 degrees.

In some instances, it is desirable to sequence the incorporation of ingredients. For instance, the slag may be introduced into the drilling fluid after the addition of thinners and/or retarders. This is particularly true if mixed metal hydroxides are used in the drilling fluid to impart thixotropic properties. In such instances, a thinner such as a lignosulphonate is preferably added before adding slag.

The mixed metal hydroxides provide better solids suspension. This, in combination with the settable filter cake provided in the technique of this invention, greatly enhances the cementing in a restricted annulus. The mixed metal hydroxides are particularly effective in muds containing clay such as sodium bentonite. Preferred systems thickened in this way contain from 3-57 kg/m³ of clay such as bentonite, preferably 6 to 43 kg/m³, most preferably 20 to 34 kg/m³. The mixed metal hydroxides are generally present in an amount between 0.3 and 6 kg/m³ of total drilling fluid, preferably between 0.3 and 4 kg/m³, most preferably between 2 and 4 kg/m³. Mixed metal hydroxides are known in the art and are trivalent metal hydroxide-containing compositions such as MgAl(OH)_{4.7}Cl_{0.3}. They conform essentially to the formula

LiₘD_{d}T(OH)_{(m+2d+3+na)}Aⁿ ₐ

where
- m: represents the number of Li ions present; the amount being between 0 and about 1;
- D: represents divalent metals ions; with
- d: representing the amount of D ions between 0 and about 4;
- T: represents trivalent metal ions;
- A: represents monovalent or polyvalent anions of valence n, other than OH⁻, with a being the amount of A anions; and
where (m+2d+3+na) is equal to or greater than 3.

A more detailed description can be found in USA patent specification No. 4 664 843.

The mixed metal hydroxides in the drilling fluid in combination with blast furnace slag tend to set to a cement having considerable strength in a comparatively short time, i.e., about one-half hour at temperatures as low as 38 °C. This can be a major asset in some applications.

Suitable fluid loss additives found in drilling fluids include bentonite clay, carboxymethylated starches, starches, carboxymethyl cellulose, synthetic resins such as "POLYDRILL" by SKW Chemicals, sulphonated lignite, lignites, lignin, or tannin compounds. Weight materials include barite, calcium carbonate, hematite and MgO, for example. Shale stabilizers that are used in drilling fluids include hydrolyzed polyacrylonitrile, partially hydrolyzed polyacrylamide, salts including NaCl, KCl, sodium or potassium formate, sodium or potassium acetate, polyethers and polycyclic and/or polyalcohols. Viscosifying additives can be used such as biopolymers, starches, attapulgite and sepiolite. Additives are also used to reduce torque. Suitable thinners such as chrome and chrome free lignosulphonates, sulphonated styrene maleic-anhydride and polyacrylate may also be used depending upon the mud type and mud weight. Lubricating additives include nonionic detergents and oil (diesel, mineral oil, vegetable oil, synthetic oil), for instance. Alkalinity control can be obtained with KOH, NaOH or CaO, for instance. In addition, other additives such as corrosion inhibitors, nut hulls etc. may be found in a typical drilling fluid. Of course, drill solids including such minerals as quartz and clay minerals (smectite, illite, chlorite, kaolinite, etc.) may be found in a typical mud.

After the completion of the drilling, the drilling fluid is activated. This can be done by adding activators as discussed in detail hereinbelow, by adding additional blast furnace slag, or both. Preferably, the activation is done by adding additional blast furnace slag and an accelerator. It is also in the scope of the invention for the cementitious slurry to comprise hydraulic materials other than blast furnace slag, for instance, pozzolans and other hydraulic materials can be present. By 'hydraulic material' is meant a material which, on contact with water and/or activators, hardens or sets into a solidified composition.

The activator or activators can be added either with any other ingredients that are added before the additional blast furnace slag, with the additional blast furnace slag, or after the addition of the additional blast furnace slag.

In some instances, it may be desirable to use a material which functions as a retarder along with the activator because of the need for other effects brought about by the retarder. For instance, a chromium lignosulphonate may be used as a thinner along with the activator even though it also functions as a retarder.

As noted hereinabove, the activator can be nothing more than additional blast furnace slag in a concentration high enough to form a cementitious slurry. Blast furnace slag will eventually hydrolyze and form cement particularly if it is in a heated environment or if heat is applied to the borehole to speed up the setting.

However, it is greatly preferred to utilize a combination of slag in an amount which represents the majority of the total slag in the cementitious composition (i.e., a majority of the total of the slag in the drilling fluid and the slag added to form the cementitious slurry) and a chemical activator. Suitable chemical activators include sodium silicate, sodium fluoride, sodium silicofluoride, magnesium silicofluoride, zinc silicofluoride, sodium carbonate, potassium carbonate, sodium hydroxide, potassium hydroxide, calcium hydroxide, sodium sulphate and mixtures thereof. A mixture of caustic soda (sodium hydroxide) and soda ash (sodium carbonate) is preferred because of the effectiveness and ready availability. When mixtures of alkaline agents such as caustic soda and soda ash are used the ratio can vary rather widely since each will function as an accelerator alone. Preferably, about 2.8 to 57 kg/m³ of caustic soda, more preferably 5 to 17 kg/m³ of caustic soda are used in conjunction with from 5 to 143 kg/m³, preferably 5 to 57 kg/m³ of soda ash. The references to "kg/m³" means kg per m³ of final cementitious slurry.

In yet another embodiment of this invention the drilling process is carried out as described hereinabove with a universal fluid to produce a borehole through a plurality of strata, thus laying down a filter cake. Prior to the cementing operation, an activator is passed into contact with the filter cake, for instance by circulating the activator down the drill string and up the annulus between the drill string and the filter cake, or else the drill string is removed and the casing inserted and the activator circulated down the casing and up the annulus. As used herein 'down' as it relates to a drill string or casing means in a direction toward the farthest reach of the borehole even though in rare instances the borehole can be disposed in a horizontal position. Similarly, 'up' means back toward the beginning of the borehole. Preferably, the circulation is carried out by using the drill string, this being the benefit of this embodiment of the invention whereby the filter cake can be "set" to shut off gas zones, water loss, or to shut off lost circulation in order to keep drilling without having to remove the drill string and set another string of casing. This can also be used to stabilize zones which may be easily washed-out (salt zones wherein the salt is soluble in water, for instance) or other unstable zones. After the drilling is complete the drilling fluid is then diluted, the drill string removed, and the cementing carried out as described hereinabove. This can be accomplished by circulating a separate fluid containing the activator or by adding an activator such as an alkali as described hereinabove to the drilling fluid.

The present invention further relates to a method for drilling and cementing a well, wherein the drilling fluid comprises water and between 47 and 143 kg/m³ of blast furnace slag, clay, starch, partially hydrolyzed polyacrylamide, and barite, wherein the casing has such an outer diameter that the width of the annulus between the outer surface of the casing and the inner surface of the borehole is between 0.2 and 4 cm, wherein the activator composition comprises blast furnace slag, a lignosulphonate thinner, and an activator comprising a mixture of caustic soda and soda ash, and wherein the total amount of blast furnace slag in the cementitious slurry is between 285 and 1 430 kg/m³.

Conventional spacers may be used in the above described sequence. Also, any leftover fluid having activators therein may be displaced out of the borehole by the next fluid and/or spacer fluid and stored for subsequent use or disposal.

In this embodiment where the filter cake is "set", the activator can be any of the alkaline activators referred to hereinabove such as a mixture of sodium hydroxide and sodium carbonate.

The invention will now be described in more detail by way of example with reference to the below test.

A 1 665 kg/m³ universal fluid was prepared using a 1 617 kg/m³ drilling fluid having the following composition: 20 wt% salt (140 000 mg/l), 23-28 kg/m³ bentonite, 11-17 kg/m³ carboxymethyl starch, sold under the trade name "BIOLOSE" by Milpark, 1.4-2.8 kg/m³ partially hydrolyzed polyacrylamide (PHPA), sold under the trade name "NEWDRIL", by Milpark, 2.8-3.6 kg/m³ CMC, sold under the trade name "MILPAC" by Milpark, 86-200 kg/m³ drill solids, 0-700 kg/m³ barite, and 114 kg/m³ of blast furnace slag sold under the trade name "NEWCEM" by Blue Circle Cement Company.

The universal fluid was designed to be a drilling fluid at temperatures 49 °C through 71 °C and to provide a settable filter cake for better zonal isolation and for protection of the formation. A full-scale horizontal borehole model was used to test the hardening of this universal fluid. This universal fluid was tested to show that it and its filter cake would set up under downhole conditions.

The 1 665 kg/m³ universal fluid was circulated through the model and a filter cake was formed. A portion of the universal fluid was then converted into a 1 845 kg/m³ cementitious slurry by the addition of slag and activators as described hereinafter and was used to displace the universal fluid in the borehole model. The borehole model was heat aged at 93 °C for three weeks. The most important objective of this test was to deposit the universal fluid in simulated washed-out sections and to show that undisplaced universal fluid pockets can be set up in the worst possible physical conditions.

Test objectives were: 1) to demonstrate that undisplaced pockets of the 1 665 kg/m³ universal fluid can set up under downhole conditions in order to eliminate unset fluids and filter cakes in the test model, 2) to demonstrate that the 1 665 kg/m³ universal fluid could be converted into a cementitious slurry with satisfactory slurry and set cement properties, and 3) to demonstrate that a universal fluid/cementitious slurry job can improve zonal isolation (improved shear and hydraulic bond in the model) and provide lateral casing support.

Test conditions: three washed-out sections (2.54, 5.08 and 15.24 cm wide) were specially built by modifying a synthetic borehole model. The displacement test on the modified model was based on the following field conditions:

Universal fluid Condition - Drilling a deviated hole with a diameter of 27 cm at borehole circulating temperature (BHCT) of 49 °C to 71°C.

Cement slurry condition - Borehole static temperature (BHST) of 93 °C (5 486 m)

Displacement Model: A 12.7-cm outside diameter (OD), 4.6-m long steel casing in a 16.5-cm inside diameter (ID) synthetic core, simulating a formation with the 3 washed-out sections, was used in a horizontal position using the following test conditions: 1) slow displacement rates (159 l/min) in order not to wash away the deposited filter cake and to preserve undisplaced universal fluid in the washed-out sections, 2) 100% casing standoff (centralized).

The synthetic core (formation) was a 4.45-cm thick layer of a permeable sand-epoxy mix on the inner circumference of the model (27.3-cm OD and 25.4-cm ID steel casing). Three washed out sections (sharp edged with no transition zones) were made by removing portions of the simulated sand-epoxy formation before welding the sections of the 4.57 m total length steel casing together. The tops of the three wash-outs (2.54, 5.08 and 15.24 cm wide) were placed at 1.5 m, 2.1 m, and 3 m respectively from the bottom of the borehole model. As mentioned earlier, the 12.7-cm OD steel casing was centralized inside the borehole model leaving a theoretical annular clearance of 1.9 cm except in the wash-outs where it was 6.35 cm wide.

The 1.9 cm annular clearance simulates the narrow annulus in a slim hole well.

Deposition of filter cake: The above-described 1 665 kg/m³ universal fluid was circulated for 2 hours through the water-saturated borehole model at 447-636 l/min. The borehole model was shut in, electrically heated to 60 °C and pressurized. Filtrate was collected at a pressure differential of 0.69 MPa to build a filter cake approximately 0.32 cm thick on the core.

Displacement: after the overnight filtering period at 60 °C, the universal fluid was circulated through the borehole model at 159 1/min for 20 minutes while collecting additional filtrate. During the time of circulation, a 795 1 batch of universal fluid was isolated from the universal fluid and converted it into a 570 kg/m³ cementitious slurry by adding additional 457 kg/m³ NEWCEM brand slag, activators and a retarder. The cementitious slurry was then dyed by adding 7 kg/m³ red iron oxide. The activator system was made up of 11 kg/m³ caustic soda, 40 kg/m³ soda ash and 17 kg/m³ "SPERSENE CF" (chrome free lignosulphonate manufactured by MI Drilling Fluids). The universal fluid was displaced out of the borehole model with the dyed cementitious slurry at 159-318 l/min until the initial portion of uncontaminated cementitious slurry was noted at the discharge. The slow displacement was employed in order to leave substantial amounts of undisplaced universal fluid in the model. The cementitious slurry was then circulated through the borehole model for an additional 20 minutes at 159-318 1/min.

Evaluation of the core: after a three-week aging period at 93 °C, the borehole model was allowed to cool to room temperature. The model was then disassembled and sawed into three sections. These sections were again sawed into smaller sections for further shear and hydraulic bond tests.

All the available cross sections were photographed for estimating displacement efficiency. As planned, the displacement efficiency was about 55%. The normally poor displacement efficiency of the model was clearly represented by the high angle of the borehole model. Although the casing was centralized, a perfect centralization was not obtained. Much of the universal fluid was not displaced out of the annulus in the narrow side of the annulus. By 'displacement efficiency' is meant the volume of mud removed divided by the volume of the annulus times 100 to convert to percent.

Thus, this example demonstrates the value of the invention in a narrow annulus such as is found in a slim hole well.

The presence of undisplaced universal fluid was evident all the way from one end to the other end, especially on the bottom side. Even so, the universal fluid filter cakes and undisplaced universal fluid pockets were found to be very hard. A test with a hand held penetrometer indicates that the universal fluid filter cakes and cementitious slurry had compressive strengths in excess of 5.1 MPa (maximum reading). In essence, an excellent cement job was obtained in spite of the slow pumping rates, high angle (90°) of the hole and presence of the three wash-outs. The cement job would have been very poor with a displacement efficiency of 55% if the universal fluid/cement slurry had not been used.

Blocks containing the washed-out portions of the model were sawed and further evaluated. Lengthwise diamond saw cuts were made to produce parallel faced slices about 3 to 4 cm thick. These slices exposed the newly cut cross sections of the formation, the annulus, the wash-outs and the hardened universal fluid, universal fluid filter cake, and the cementitious slurry.

Hardened universal fluid and universal fluid filter cake were found in the 2.54 cm wash-out, at the base of the 5.08 cm wash-out, and at the base corners of the 15.24 cm wash-out. The increased hardness near the permeable formation faces in the wash-outs is caused by the concentration of the universal fluid by fluid loss. The hardened universal fluids showed a compressive strength between about 3.4 10.5 MPa. Although there were various lamination in the samples, the annulus and washed-out sections were completely cemented and the overall zonal isolation was excellent.

Additionally, 8 slag cementitious slurry samples were taken during the displacement and cured in 5 cm cube moulds at 93 °C for one week. An average compressive strength of 13 MPa with a standard deviation of 1 MPa was obtained.

Hydraulic Bond Test Results: the top section (1.4 m long) was cut into two smaller sections. In-situ hydraulic bond tests were conducted on these cores (0.7 m long) using a fluorescent dyed water. Two taps (front and back) were drilled to the casing on the core and nipples were installed using epoxy resin. Dyed water was pumped through the nipples using an hydraulic pump and maximum breakdown pressures were recorded as hydraulic bond strength. The test results were as follows:

| Core/Pressure Tap | Hydraulic Bond, MPa |
|---|---|
| H-1, Front | 12.4 |
| H-1, Back | 2.7 |
| H-2, Front | 3.8 |
| H-2, Back | 5.2 |

Shear Bond Test Results: The two bottom sections of the model (1.4 m long) were cut into 5 pieces for shear bond tests. The sections containing the wash-outs were excluded from the shear bond tests. Shear bond was measured by pressing out the casing on a hydraulic press. The test results were as follows:

| Sample | Pipe Length (cm) | Force (kN) | Shear Bond (MPa) |
|---|---|---|---|
| S-1 | 25 | 18 | 0.18 |
| S-2 | 23 | 86 | 0.93 |
| S-3 | 22 | 7.6 | 0.88* |
| S-4 | 27 | 45 | 0.42 |
| S-5 | 27 | 24 | 0.22 |
| S-6 | 27 | 22 | 0.22 |
| S-7 | 27 | 7.0 | 0.06* |
| S-8 | 22 | 8.9 | 0.10* |

| | | | |
|---|---|---|---|
| *Specimens appeared damaged during sawing the core. | | | |

In addition, 4 slag cementitious slurry samples were taken during the displacement and cured in laboratory shear bond moulds with a steel pipe having a dimension of 10 cm length and 3.8 OD at 93 °C for one week. An average shear bond was 0.32 MPa.

From the above the following is concluded. The undisplaced pockets of the universal fluid were set hard with a compressive strength between 3.4 and 10 MPa. Excellent hydraulic bond data were obtained. Although varied, shear bond data are very good. It is demonstrated that (1) a blast furnace slag universal fluid can achieve a 100% displacement efficiency by eliminating unset pockets of drilling fluid even in a narrow annulus, (2) a blast furnace slag universal fluid can improve a lateral support of casing by eliminating unset materials and providing additional strength through solidification of those portions which otherwise would be unset, (3) a blast furnace slag universal fluid can improve zonal isolation through improving shear and hydraulic bonds, and (4) a high density blast furnace slag universal fluid can be formulated and utilized at elevated temperatures.

## Claims

1. A method for drilling and cementing a well comprising:
drilling a borehole with a rotary drilling assembly comprising a drill string and a drill bit utilizing a drilling fluid comprising water and furnace slag;
circulating the drilling fluid down the drill string and up an annulus between the drill string and wall of the borehole, thus laying down a filter cake on the wall of the borehole during the drilling;
withdrawing the drilling assembly and inserting a casing;
adding an activator to the drilling fluid to produce a cementitious slurry; and
circulating the cementitious slurry down the casing and up into the annulus,
characterized in that the furnace slag is blast furnace slag, and in that the casing has such an outer diameter that the width of the annulus between the outer surface of the casing and the inner surface of the borehole is between 0.2 and 4 cm.

2. The method according to claim 1, wherein the activator is additional blast furnace slag and alkaline agent.

3. The method according to claim 2, wherein the alkaline agent is a mixture of caustic soda and soda ash.

4. The method according to claim 3, wherein the drilling fluid comprises, in addition, a lignosulphonate thinner.

5. The method according to claim 2, wherein the drilling fluid contains between 57 and 143 kg/m³ of the blast furnace slag and wherein the additional blast furnace slag is added in forming the cementitious slurry in an amount sufficient to give a total amount of cementitious material in the cementitious slurry between 285 and 1 430 kg/m³.

6. The method according to claim 5, wherein the blast furnace slag represents the only hydraulic component in the cementitious slurry.

7. The method according to claim 2, wherein the slag of the drilling fluid and the slag of the activator each are made up of a mixture of between 5 and 25 wt% ultrafine ground slag and between 80 and 95 wt% of fine or microfine ground slag.

8. The method according to claim 1, wherein the water contains dissolved salts.

9. The method according to claim 8, wherein the dissolved salts comprise sodium chloride.

10. The method according to claim 9, wherein the sodium chloride is present in an amount between 0.2 and 5 wt%.

11. The method according to claim 8, wherein the water comprises sea water.

12. The method according to claim 1, wherein the drilling fluid contains, in addition, a polycyclicpolyetherpolyol.

13. The method according to claim 1, wherein the borehole has a diameter between 10 and 15 cm and the annulus has a width between 0.4 and 3 cm.

14. The method according to claim 1, wherein the drilling fluid contains clay and a mixed metal hydroxide thixotropic agent.

15. The method according to claim 14, wherein the clay is bentonite and the mixed metal hydroxide is MgAl(OH)_{4.7}Cl_{0.3}, wherein a lignosulphonate thinning agent is added prior to adding the activator, and wherein the activator comprises additional blast furnace slag and an alkaline agent.

16. The method according to claim 1, wherein:
prior to the withdrawing the drilling assembly, an activator is passed down the drill string and up into contact with the filter cake, thus causing setting of the filter cake; and
thereafter additional drilling is carried out.

17. The method according to claim 1, wherein the drilling fluid comprises water and between 47 and 143 kg/m³ of blast furnace slag, clay, starch, partially hydrolyzed polyacrylamide, and barite, wherein the activator composition comprises blast furnace slag, a lignosulphonate thinner, and an activator comprising a mixture of caustic soda and soda ash, and wherein the total amount of blast furnace slag in the cementitious slurry is between 285 and 1 430 kg/m³.

## Patentansprüche

1. Verfahren zum Bohren und Zementieren einer Bohrung, bei dem man:
mittels einer Drehbohranordnung mit einem Bohrgestänge und einem Bohrkopf unter Verwendung eines Bohrspülmittels, das Wasser und Ofenschlacke enthält, ein Bohrloch bohrt;
das Bohrspülmittel durch das Bohrgestänge nach unten und durch einen Ringraum zwischen dem Bohrgestänge und der Bohrlochwand wieder nach oben leitet, wodurch man beim Bohren auf der Bohrlochwand einen Filterkuchen niederschlägt;
die Bohranordnung herauszieht und ein Futterrohr einsetzt;
dem Bohrspülmittel einen Aktivator zusetzt, wobei eine zementartige Aufschlämmung entsteht; und
die zementartige Aufschlämmung durch das Futterohr nach unten und wieder nach oben in den Ringraum leitet,
dadurch gekennzeichnet, daß man als Ofenschlacke Hochofenschlacke einsetzt und das Futterrohr einen solchen Außendurchmesser hat, daß die Breite des Ringraums zwischen der Außenfläche des Futterrohrs und der Innenfläche des Bohrlochs zwischen 0,2 und 4 cm beträgt.

2. Verfahren nach Anspruch 1, bei dem man als Aktivator weitere Hochofenschlacke und ein alkalisches Reagens einsetzt.

3. Verfahren nach Anspruch 2, bei dem man als alkalisches Reagens ein Gemisch aus Ätznatron und wasserfreier Soda einsetzt.

4. Verfahren nach Anspruch 3, bei dem man ein Bohrspülmittel einsetzt, das zusätzlich noch ein Lignosulfonat-Verdünnungsmittel enthält.

5. Verfahren nach Anspruch 2, bei dem man ein Bohrspülmittel einsetzt, das zwischen 57 und 143 kg/m³ der Hochofenschlacke enthält und man die zusätzliche Hochofenschlacke bei der Herstellung der zementartigen Aufschlämmung in einer solchen Menge zugibt, daß sich eine Gesamtmenge an zementartigem Material in der zementartigen Aufschlämmung zwischen 285 und 1430 kg/m³ ergibt.

6. Verfahren nach Anspruch 5, bei dem die Hochofenschlacke die einzige hydraulische Komponente in der zementartigen Aufschlämmung darstellt.

7. Verfahren nach Anspruch 2, bei dem die Bohrspülmittelschlacke und die Aktivatorschlacke jeweils aus einem Gemisch aus 5 bis 25 Gew.-% ultrafein gemahlener Schlacke und 80 bis 95 Gew.-% fein oder mikrofein gemahlener Schlacke bestehen.

8. Verfahren nach Anspruch 1, bei dem das Wasser gelöste Salze enthält.

9. Verfahren nach Anspruch 8, bei dem die gelösten Salze Natriumchlorid enthalten.

10. Verfahren nach Anspruch 9, bei dem man das Natriumchlorid in einer Menge zwischen 0,2 und 5 Gew.-% einsetzt.

11. Verfahren nach Anspruch 8, bei dem man als Wasser Meerwasser einsetzt.

12. Verfahren nach Anspruch 1, bei dem man ein Bohrspülmittel einsetzt, das zusätzlich noch ein polycyclisches Polyetherpolyol enthält.

13. Verfahren nach Anspruch 1, bei dem das Bohrloch einen Durchmesser zwischen 10 und 15 cm und der Ringraum eine Breite zwischen 0,4 und 3 cm aufweist.

14. Verfahren nach Anspruch 1, bei dem man ein Bohrspülmittel einsetzt, das Ton und ein Metallmischhydroxid als Thixotropiermittel enthält.

15. Verfahren nach Anspruch 14, bei dem man als Ton Bentonit und als Metallmischhydroxid MgAl(OH)_{4,7}Cl_{0,3} einsetzt, wobei man vor der Aktivatorzugabe ein Lignosulfonat-Verdünnungsmittel zusetzt und man einen Aktivator einsetzt, der weitere Hochofenschlacke und ein alkalisches Reagens enthält.

16. Verfahren nach Anspruch 1, bei dem man:
vor dem Herausziehen der Bohranordnung einen Aktivator durch das Bohrgestänge nach unten und wieder nach oben leitet und so mit dem Filterkuchen in Berührung bringt, wodurch der Filterkuchen abbindet; und
danach weiterbohrt.

17. Verfahren nach Anspruch 1, bei dem das Bohrspülmittel Wasser und zwischen 47 und 143 kg/m³ Hochofenschlacke, Ton, Stärke, teilhydrolysiertes Polyacrylamid und Schwerspat enthält, die Aktivatorzusammensetzung Hochofenschlacke, ein Lignosulfonat-Verdünnungsmittel und einen Aktivator, der ein Gemisch aus Ätznatron und wasserfreier Soda enthält, enthält, und die Gesamtmenge an Hochofenschlacke in der zementartigen Aufschlämmung zwischen 285 und 1430 kg/m³ beträgt.

## Revendications

1. Procédé de forage et de cimentation d'un puits comprenant:
le forage d'un puits de forage à l'aide d'un assemblage de forage rotatif comprenant une garniture de forage and un outil de forage utilisant une fluide de forage comprenant de l'eau et du laitier de haut fourneau;
la circulation de la fluide de forage en descente dans la garniture de forage et en remontée dans un espace annulaire entre la garniture de forage et la paroi du puits de forage, en déposant ainsi un cake de boue sur la paroi du puits de forage pendant le forage;
le retrait de l'assemblage de forage et l'insertion d'un cuvelage;
l'addition d'un agent d'activation à la fluide de forage pour produire une suspension de cimentation; et
la circulation de la suspension de cimentation en descente dans le cuvelage et en remontée dans l'espace annulaire,
caractérisé en ce que le laitier de haut fourneau est du laitier de haut fourneau à courant d'air forcé, et en ce que le cuvelage a un diamètre extérieur tel que la largeur de l'espace annulaire entre la surface externe du cuvelage et la surface interne du puits de forage est comprise entre 0,2 et 4 cm.

2. Procédé selon la revendication 1, caractérisé en ce que l'agent d'activation est du laitier de haut fourneau à courant d'air forcé supplémentaire et un agent alcalin.

3. Procédé selon la revendication 2, caractérisé en ce que l'agent alcalin est un mélange de soude caustique et de soude calcinée.

4. Procédé selon la revendication 3, caractérisé en ce que la boue de forage comprend, en plus, un diluant de lignosulfonate.

5. Procédé selon la revendication 2, caractérisé en ce que la fluide de forage contient entre 57 et 143 kg/m³ de laitier de haut fourneau à courant d'air forcé, et en ce que le laitier de haut fourneau à courant d'air forcé supplémentaire est ajouté en formant la suspension de cimentation dans une quantité suffisante pour donner une quantité totale de matériau de cimentation dans la suspension de cimentation comprise entre 285 et 1 430 kg/m³.

6. Procédé selon la revendication 5, caractérisé en ce que le laitier de haut fourneau à courant d'air forcé représente le seul composant hydraulique dans la suspension de cimentation.

7. Procédé selon la revendication 2, caractérisé en ce que le laitier de fluide de forage et le laitier de l'agent d'activation sont chacun faits d'un mélange de 5-25 % en poids de laitier broyé sous forme ultrafine et de 80-95 % en poids de laitier broyé sous forme fine ou microfine.

8. Procédé selon la revendication 1, caractérisé en ce que l'eau contient des sels dissous.

9. Procédé selon la revendication 8, caractérisé en ce que les sels dissous comprennent le chlorure de sodium.

10. Procédé selon la revendication 9, caractérisé en ce que le chlorure de sodium est présent dans une quantité comprise entre 0,2 et 5 % en poids.

11. Procédé selon la revendication 8, caractérisé en ce que l'eau comprend de l'eau de mer.

12. Procédé selon la revendication 1, caractérisé en ce que la boue de forage contient, de plus, un polyétherpolyol polycyclique .

13. Procédé selon la revendication 1, caractérisé en ce que le puits de forage a un diamètre compris entre 10 et 15 cm et en ce que l'espace annulaire a une largeur comprise entre 0,4 et 3 cm.

14. Procédé selon la revendication 1, caractérisé en ce que la boue de forage contient de l'argile et un agent thixotrope d'hydroxyde métallique mixte.

15. Procédé selon la revendication 14, caractérisé en ce que l'argile est la bentonite et l'hydroxyde métallique mixte est MgAl(OH)_{4,7}Cl_{0,3}, en ce qu'un agent diluant de lignosulfonate est ajouté avant l'addition de l'agent d'activation, et en ce que l'agent d'activation comprend du laitier de haut fourneau à courant d'air forcé supplémentaire et un agent alcalin.

16. Procédé selon la revendication 1, caractérisé en ce que,
avant le retrait de l'assemblage de forage, on fait passer un agent d'activation en descente dans la garniture de forage et en remontée en contact avec le cake de boue, en provoquant ainsi le durcissement du cake de boue; et
en ce que l'on effectue subséquemment un forage supplémentaire.

17. Procédé selon la revendication 1, caractérisé en ce que la fluide de forage comprend de l'eau et entre 47 et 143 kg/m³ de laitier de haut fourneau à courant d'air forcé, d'argile, d'amidon, de polyacrylamide partiellement hydrolysé et de baryte, en ce que la composition d'agent d'activation comprend un laitier de haut fourneau à courant d'air forcé, un diluant de lignosulfonate, et un agent d'activation comprenant un mélange de soude caustique et de soude calcinée, et en ce que la quantité totale de laitier de haut fourneau à courant d'air forcé dans la suspension de cimentation est comprise entre 285 et 1 430 kg/m³.
